# EUROPEAN PATENT SPECIFICATION

(11) **EP 0 844 266 B1**
(45) Date of publication and mention of the grant of the patent: **15.12.2004**
(21) Application number: 98101306.3
(22) Date of filing: 14.09.1992
(51) Int. Cl.: C08G 65/32, C08L 71/02, C08K 13/02, C08K 5/54, C08K 9/04

(54) **Curable composition**
Härtbare Zusammensetzung
Composition durcissable

(30) Priority: 12.09.1991 JP 26053291
(43) Date of publication of application: 27.05.1998
(62) Divisional of application: 92115690.7
(73) Proprietor: KANEGAFUCHI KAGAKU KOGYO KABUSHIKI KAISHA, Kita-ku, Osaka-shi, Osaka 530 (JP)
(72) Inventor: Iwakiri, Hiroshi, Nishi-ku, Kobe-shi,Hyogo, (JP); Fujita, Masayuki, Himejishi-shi, Hyogo (JP); Hasegawa, Takashi, Kakogawa-shi, Hyogo (JP)
(74) Representative: VOSSIUS & PARTNER

(56) References cited:
- EP-A- 0 345 800
- EP-A- 0 397 036
- US-A- 3 971 751
- US-A- 4 302 571

## Description

The present invention relates to a one pack type room temperature-curable composition having a good workability.

Oxypropylene polymers having groups containing a silicon atom to which a hydroxy group and/or a hydrolyzable group is bonded, which is capable of crosslinking by forming a siloxane bond (hereinafter referred to as reactive silicon group) are disclosed in JP-A-52-73998 (the term "JP-A" as used herein means an "unexamined published Japanese patent application"), U.S. Patent 3,971,751, etc., and a typical example thereof is a polymer represented by the following general formula: 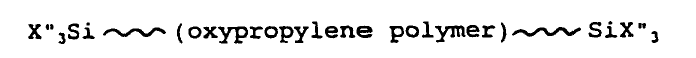 wherein X" represents a hydrolyzable group such as a methoxy group, etc.

The oxypropylene polymer having the reactive silicon group cures by forming a siloxane bond (Si-O-Si) between the polymer chains by reacting with moisture in the air at room temperature to provide a rubbery cured product. Since the cured product has excellent elongation characteristics, strength, adhesive property, etc., the product has been used as sealants, adhesives, etc.

In the particular case of sealant use, etc., the oxypropylene polymer composition is used as a one-pack type composition which is convenient for handling. The one-pack type composition is a composition prepared by previously compounding all the necessary additives, stored in a closed state and during use cures by the action of moisture in the air.

When the polymer composition is used as a sealant, the composition is kept in a cartridge and is extruded into crevices in the wall, ceiling, floor etc. To facilitate easy filling and extruding of the composition, the viscosity of the polymer (composition) must be low but on the other hand, after application the polymer should not sag before the curing is complete. By reducing the molecular weight distribution of the polymer (corresponding to Mw/Mn; Mw: weight average molecular weight, Mn: number average molecular weight), the viscosity of the polymer is lowered and the extrusion property is improved compared to polymers with a large molecular weight distribution. However, as the viscosity of the polymer is reduced the potential for sagging to occur is increased.

In particular, in the one-pack type of the composition containing a plasticizer, dehydrating agent, adhesion improver, and curing catalyst, the additives frequently lower the viscosity of the composition, since they are low-molecular weight compounds, and hence the problem of sagging becomes particularly severe.

It is an object of the present application to overcome the above-mentioned problems with the known compositions.

This object has been solved by a one-pack type composition using a oxypropylene polymer having a reactive silicon group and a narrow molecular weight distribution, adding thereto calcium carbonate containing at least 30% by weight calcium carbonate of an average particle size not larger than 0.5 µm and surface-treated with a fatty acid, whereby the occurrence of sagging of the composition can be prevented with maintaining good extrusion properties.

According to the present invention, there is provided a curable composition comprising (A) 100 parts by weight of a oxypropylene polymer having a group represented by the following formula (2): 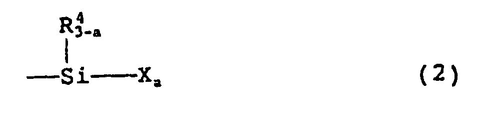 wherein R⁴ represents an alkyl group having from 1 to 20 carbon atoms, an aryl group having from 6 to 20 carbon atoms, an aralkyl group having from 7 to 20 carbon atoms, or a triorganosiloxy group shown by (R')₃SiO-(wherein R' represents a monovalent hydrocarbon group having from 1 to 20 carbon atoms and said three R's may be the same or different), when two or more R⁴s exist, they may be the same or different; X represents a hydroxyl group or a hydrolyzable group, and when two or more Xs exist, they may be the same or different; a represents 0 or an integer from 1 to 3; with the proviso that formula (2) is not (CH₃O)₂(CH₃)Si-,
a Mw/Mn value of not more than 1.5, and an average molecular weight of at least 10,000, (B) from 100 to 200 parts by weight of calcium carbonate containing at least 30% by weight calcium carbonate of an average particle size of not larger than 0.5 µm, and surface-treated with a fatty acid, (C) from 30 to 100 parts by weight of a plasticizer containing at least 5% by weight a phthalic acid ester series plasticizer, (D) from 0.5 to 10 parts by weight of a compound represented by the formula R¹Si(OCH₃)₃ and/or Si(OCH₂CH₃)₄ (wherein R¹ represents a monovalent organic group having no amino group), (E) from 0.5 to 10 parts by weight of a compound represented by following formula (1),

R²Si(CH₃)ₙ(OR³)₃₋ₙ (1)

wherein R² represents a monovalent organic group having at least one amino group; R³ represents CH₃ or CH₂CH₃; and n represents 0 or 1
and (F) from 0.5 to 5 parts by weight of an organotin curing catalyst, the total amount of said components (D) and (E) being at least 2 parts by weight and said component (A) occupying from 15 to 35% by weight.

Practical examples of the hydrolyzable group are a hydrogen atom, a halogen atom, an alkoxy group, an acyloxy group, a ketoxymate group, an amino group, an acid amide group, an aminoxy group, a mercapto group, and an alkenyloxy group. Of these groups, a hydrogen atom, an alkoxy group, an acyloxy group, a ketoxymate group, an amino group, an acid amido group, an aminoxy group, a mercapto group, and an alkenyloxy group are preferred. An alkoxy group such as methoxy is particularly preferable due to mild hydrolysis and easy handling of the compound.

One to three hydrolyzable groups or hydroxy groups can bond to one silicon atom.

When two or more hydrolyzable groups or hydroxy groups exist, they may be the same or different.

Practical examples of R⁴ in formula (2) are an alkyl group such as methyl, ethyl, etc., a cycloalkyl group such as cyclohexyl, etc., an aryl group such as phenyl, etc., an aralkyl group such as benzyl, etc., and the triorganosiloxy group shown by (R')₃SiO- wherein R' is methyl or phenyl.

For R⁴ and R' the methyl group is particularly preferable (subject to the proviso given above).

It is preferable that at least one, and preferably from 1.1 to 5 reactive groups exist in one molecule of the oxypropylene polymer. If the number of reactive silicon groups existing in one molecule is less than one, the curability of the curable composition becomes insufficient to produce good rubbery elastic polymers.

The reactive silicon groups may exist at the terminal of the molecular chain of the oxypropylene polymer or may exist in the molecular chain of the polymer. When the reactive silicon group exists at the terminal of the molecular chain, a rubbery cured product having a high strength, a high elongation, and a low elasticity is obtained.

The molecular weight distribution (Mw/Mn) of the oxypropylene polymer as component (A) is 1.5 or lower.

When Mw/Mn is 1.5 or lower , further 1. 4 or lower and more further 1.3 or lower, the properties of the composition of the present invention improve considerably.

The molecular weight of the oxypropylene polymer (A) is not lower than 10,000, and preferably not lower than 15,000.

The parameter (Mw/Mn) can be measured by gel permeation chromatography.

The methods for preparing the oxypropylene polymer (A) are described in JP-A-3-72527, etc.

Examples of component (B) of the curable composition of the present invention include colloidal calcium carbonate, light-weight calcium carbonate, heavyweight calcium carbonate, and calcium carbonate surface-treated with various surface-treating agents. These calcium carbonate can be used alone or as a mixture thereof. In the present invention, calcium carbonate having an average particle size of not larger than 0.5 µm, and surface-treated with a.fatty acid is used in an amount of at least 30% by weight of whole calcium carbonate. A calcium carbonate having an average particle size of not larger than 0.2 µm that is surface-treated with a higher fatty acid is more preferable.

As the plasticizer, component (C) of the curable composition of this invention, phthalic acid esters are used. In addition to the component (C) other plasticizers such as aliphatic dibasic acid esters, aliphatic esters, phosphoric acid esters, epoxy plasticizers, polyester, polyether, polystyrene, polybutadiene, a butadiene-acrylonitrile copolymer, polychloroprene, polyisoprene, polybutene, chlorinated paraffins, etc., can be optionally used. In the present invention, it is necessary to use the plasticizer(s) in the range from 30 to 100 parts by weight, and preferably from 50 to 80 parts by weight from the view point of workability such as extruding processability.

If the content of plasticizer is less than 30 parts by weight, the viscosity of the curable composition becomes too high and the product becomes difficult to handle in procedures such as extrusion, etc. On the other hand, if the content of the plasticizer is over 100 parts by weight, the viscosity of the curable composition becomes too low, whereby the problem in workability such as sagging, etc., occurs.

In the present invention, it is necessary to use the phthalic acid ester plasticizer in an amount of at least 5% by weight based on the total amount of used plasticizer, whereby paintability to the sealant surface (the adhesive property of a paint to the surface of the sealant) can be attained. As the phthalic acid ester series plasticizer, dioctyl phthalate is preferred.

Another embodiment of the present invention relates to a cutable composition as defined above, wherein the phthalic acid ester plasticizer is di(2-ethylhexyl phthalate).

For insuring storage stability of the curable composition of the present invention, components (D) and (E) which are dehydrating agents are used in an amount of at least 2 parts by weight.

Practical examples of component (D) include Si(OC₂H₅)₄, CH₂=CHSi-(OCH₃)₃, HSCH₂CH₂CH₂Si(OCH₃)₃, and the hydrolyzable silicon compounds illustrated below.

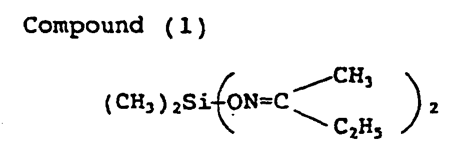

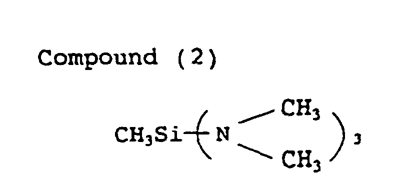

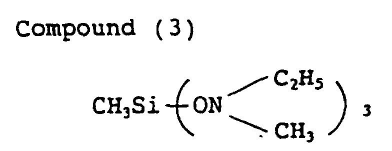

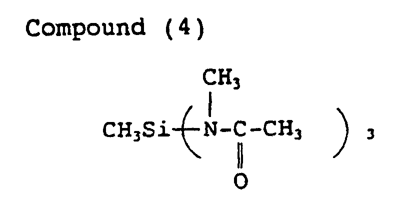

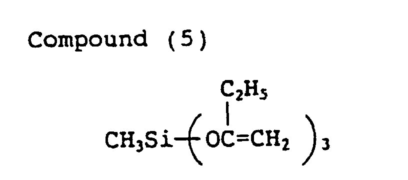

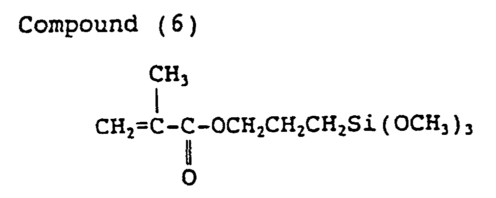

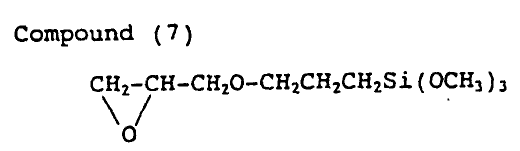

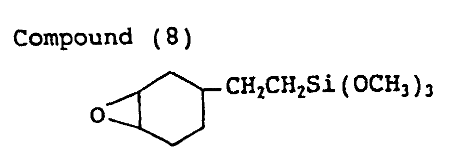

Practical examples of component (E) include amino-substituted alkoxysilanes such as H₂NCH₂CH₂NHCH₂CH₂CH₂ Si(OCH₃)₃, H₂NCH₂CH₂NHCH₂CH₂CH₂Si(CH₃)(OCH₃)₂, (C₂H₅O)₃Si-CH₂CH₂CH₂NHCH₂CH₂NHCH₂CH₂CH₂Si(OC₂H₅)₃, etc., and aminosilane compounds such as the reaction products of the above-described amino-substituted alkoxysilanes and epoxysilane compounds such as Compounds (7) and (8) described above or the reaction products of the foregoing amino-substituted alkoxysilane and methacryloxysilane compounds such as CH₂=C(CH₃)C(O)OCH₂CH₂CH₂Si(OCH₃)₃, CH₂=C(CH₃)C(O)OCH₂CH₂-CH₂Si(OCH₂CH₂OCH₃)₃, etc., and they can be used alone or as a combination thereof.

From the view points of economical reason CH₂=CHSi(OCH₃)₃ and CH₃CH₂Si(OCH₃)₃ are preferably used as component (D).

The amount of the dehydrating agent (D) used depends upon the moisture content of the curable composition and ranges from 0.5 to 10 parts by weight, and preferably from 1 to 5 parts by weight. If . the amount of the dehydrating agent (D) is less than 0.5 part by weight, a problem occurs in the storage stability when more than 10 parts by weight of the dehydrating agent is used, the modulus of the cured product increases.

To insure the adhesive properties of the curable composition (in particular, the adhesion to conventional surfaces without primer), the addition of component (E) is necessary and from an economical view point H₂N(CH₂)₂NH-(CH₂)₃Si(OCH₃)₃ is preferred. The amount of component (E) is 0.5 to 10 parts by weight, and preferably from 1 to 5 parts by weight. If the amount is less than 0.5 part by weight, the adhesive properties are insufficient, while if the amount is over 10 parts by weight, the cost is too high and performance suffers due to increasing the modulus and lowering the water resistance.

The organotin curing catalyst (F) is necessary for rapid curing. Component (F) to used in an amount of 0.5 to 5 parts by weight.

Practical examples of the organotin curing catalyst includes tin carboxylates such as dibutyltin dilaurate, dibutyltin maleate, dibutyltin diacetate, tin octylate, tin naphthenate, etc.; the reaction product of dibutyltin oxide and a phthalic acid ester; and dibutyltin diacetylacetonate. However, dibutyltin dilaurate, the reaction product of dibutyltin oxide and dioctyl phthalate (DOP), and dibutyltin diacetylacetonate are preferable for rapid curing. The use of an amine compound together with these tin compounds also expedites curing.

Practical examples of the amine compound that can be used are diethylenetriamine, triethylenetetramine, tetra-ethylenepentamine, butylamine, hexylamine, octylamine, decylamine, laurylamine, hexamethylenediamine, triethanolamine, dibutylamine, diethanolamine, N,N,N',N'-tetramethyl-1,3-butanediamine, benzylamine, cyclohexylamine, dodecamethylenediamine, dimethylethylenediamine, dimethylaminoethanol, N,N,N',N'-tetramethylethylene-diamine, triethylamine, N,N-dimethylaniline, and dimethylbenzylamine. The use of laurylamine is preferable because of reactivity and handling properties.

In this invention, it is important to attain all desired characteristics to use from 15 to 35% by weight of component (A) in the curable composition. If the content of component (A) is less than 15% by weight, problems occur in the adhesive properties and with workability, while if the content is more than 35% by weight, the control of the workability becomes undesirably difficult.

The curable composition of the present invention may contain a thixotropy-providing agent, an ultraviolet absorbent, an antioxidant, a light stabilizer, a pigment and other additives. Furthermore, if necessary, the curable composition may contain various additives such as additional curing catalyst (e.g., titanic acid esters and lead octylate), adhesion-improving agent, property controllying agent, storage stability improving agent, metal inactivating agent, ozon-deterioration inhibitor, amine radical chain inhibitor, phosphorus peroxide decomposing agent, lubricant, foaming agent or other additives.

The following reference and comparative examples are intended to illustrate the present invention more precisely. Unless otherwise indicated, all parts, percentages and ratios are by weight.

### Reference Examples 1 to 3

Using a polyoxypropylene having groups (CH₃O)₂Si(CH₃)CH₂CH₂CH₂- at 85% of the whole terminals, a number average molecular weight (measured by gel permeation chromatography using polystyrene as standard polymer) of 12,000, and a molecular weight distribution (Mw/Mn) of 1.25 (polymer A), curable compositions shown in Table 1 were prepared and the characteristics of these compositions were evaluated. The results are shown in Table 1. In Table 1, PPG represents polypropylene glycol having a molecular weight of about 2,500; Nocrack NS-6® represents a bisphenol type hindered phenol antioxidant agent, TINUVIN® 327 represents a benzotriazole UV absorbent produced by Ciba-Geigy Ltd., Sanol® LS-770 represents a hindered amine stabilizer produced by Sankyo Co., Ltd.

Each curable composition in the examples was prepared by placing whole components, except tin catalyst and silicon compounds, into a 5 liter Planetary mixer, dehydrating for 5 hours at 110°C under reduced pressure, and cooling the mixture to room temperature. After introducing the silicon compounds and the tin catalyst to the mixture, and stirring the resultant mixture for 30 minutes, the mixture was packed into a cartridge.

Characteristics of the compounds were evaluated as follows.

### Sagging Property:

The property was evaluated by applying each curable composition into a vertical wall gap and observing the degree of sagging.
A: No sagging
B: Little sagging
C: Substantially sagging.

### Extruding Properties:

The extruding properties were evaluated by filling a cylindrical cartridge with each curable composition and determining whether the composition was extruded easily.
A: Easily extruded
B: Extruded with considerable pressure.

### Coating Property:

A commercially available acrylic paint was painted over a 5x5 squire cut pattern of each cured product. The coating property was evaluated by the number of peeled squares of coating.
A: 0/25
B: less than 5/25
C: 6-20/25
D: more than 20/25

### Storage Stability:

The storage stability was evaluated by determining the increasing ratio of the viscosity of each curable composition after storing it for one month at 50°C.
A: Increasing ratio of less than 1.5 times.
B: Increasing ratio of more than 1.5 times.

### Adhesive Property:

The property was evaluated by applying each curable composition into the gap between two sheets of glass, allowing the composition to cure, and breaking the glass plates to determine the state of adhesion of the cured composition on the glass plate.
A: Cohesive failure
B: Adhesive failure.

### Comparative Examples 1 to 5

Using polyoxypropylene having groups (CH₃O)₂Si-(CH₃)₂CH₂CH₂CH₂- at 85% of the whole terminals, a number average molecular weight (measured by gel permeation chromatography using polystyrene as a standard polymer) of 12,000, and a molecular weight distribution (Mw/Mn) of 2.0 (polymer C) and 1.25 (polymer A) curing compositions shown in Table 1 were prepared and the characteristics of each composition were evaluated as in the above-described examples. The results obtained are shown in Table 1.

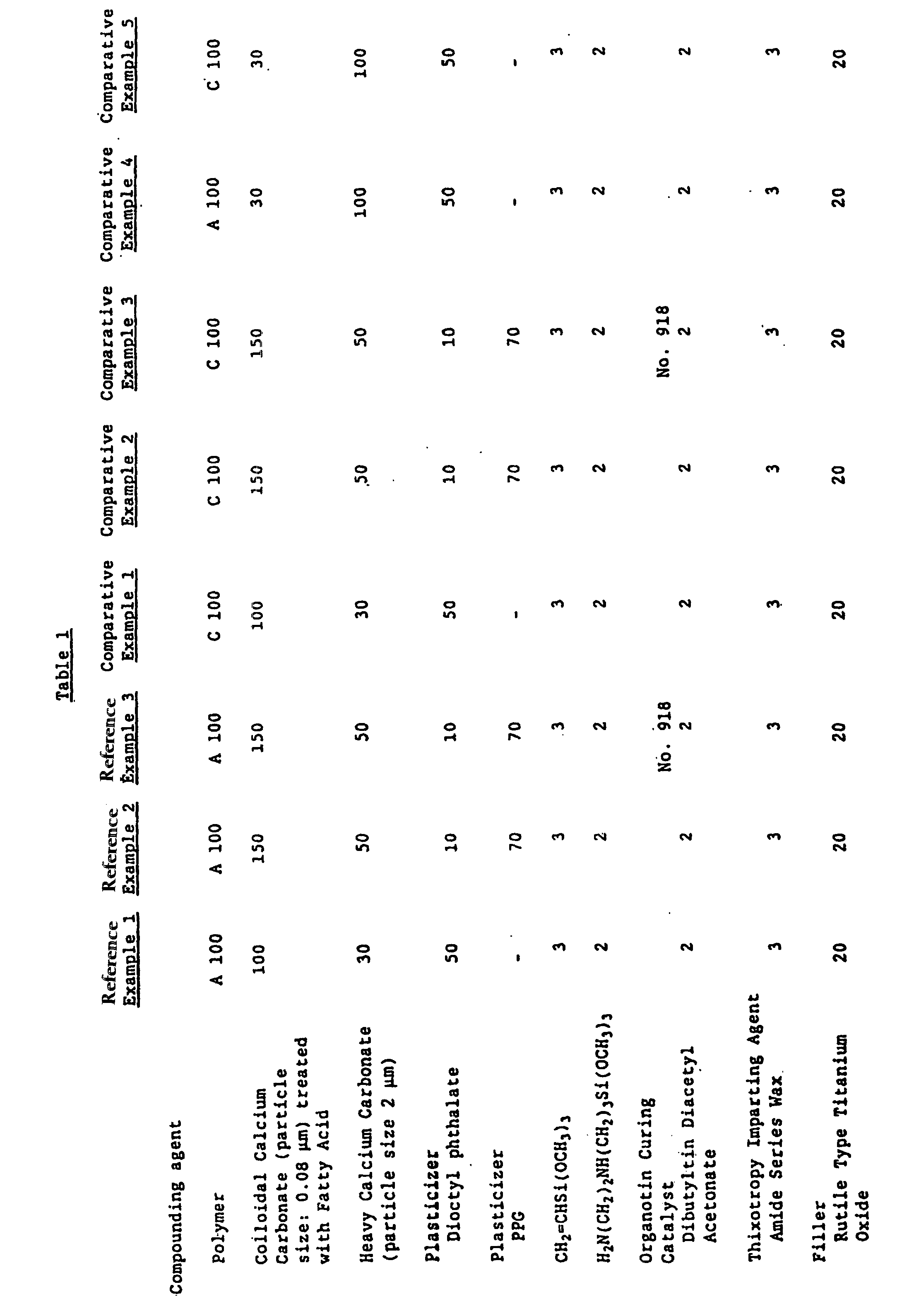

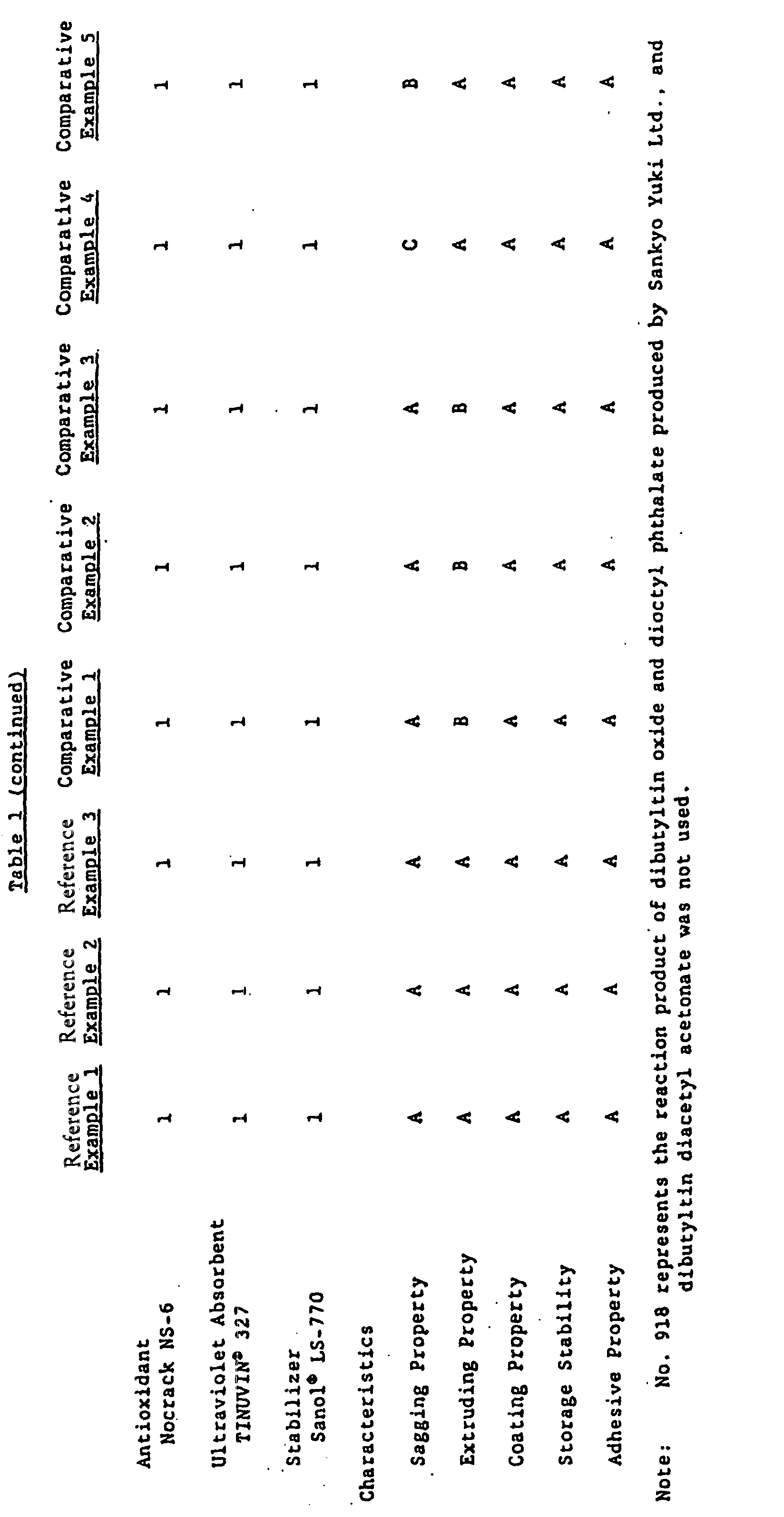

As is clear from the results shown in Table 1, that when the polymers have a small molecular weight distributions as in Reference Examples 1 to 3, curable compositions demonstrate good extruding property and decreased sagging property compared with the polymers having a large molecular weight distributions.

Also, from Comparative Example 4, it can be seen that when the polymer has a small molecular weight distribution, and a reduced amount of calcium carbonate treated with a fatty acid is used, sagging of each curable composition becomes severe. However, if the polymer has a large molecular weight distribution, little sagging occurs.

### (comparative Example 5)

### Reference Examples 4 to 6 and Comparative Examples 6 to 8

Using polymer B which is polyoxypropylene having groups (CH₃O)₂Si(CH₃)CH₂CH₂CH₂NHC(O)O- at 90% of the whole terminals, a number average molecular weight of 20,000, and a molecular weight distribution (Mw/Mn) of 1.3, polymers A and C, curable compositions shown in Table 2 were prepared and the characteristics of the compositions were evaluated as described above. The results are shown in Table 2.

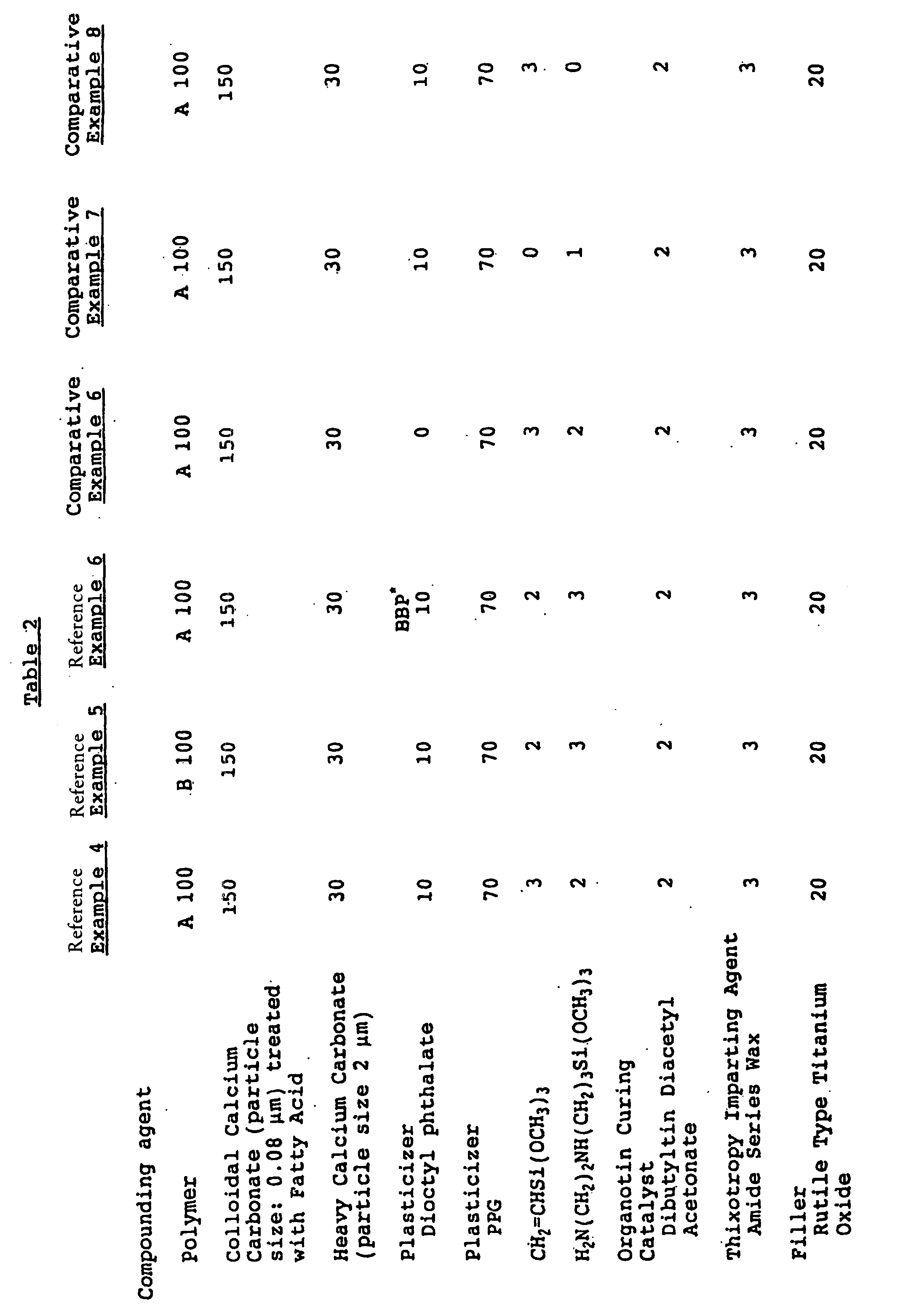

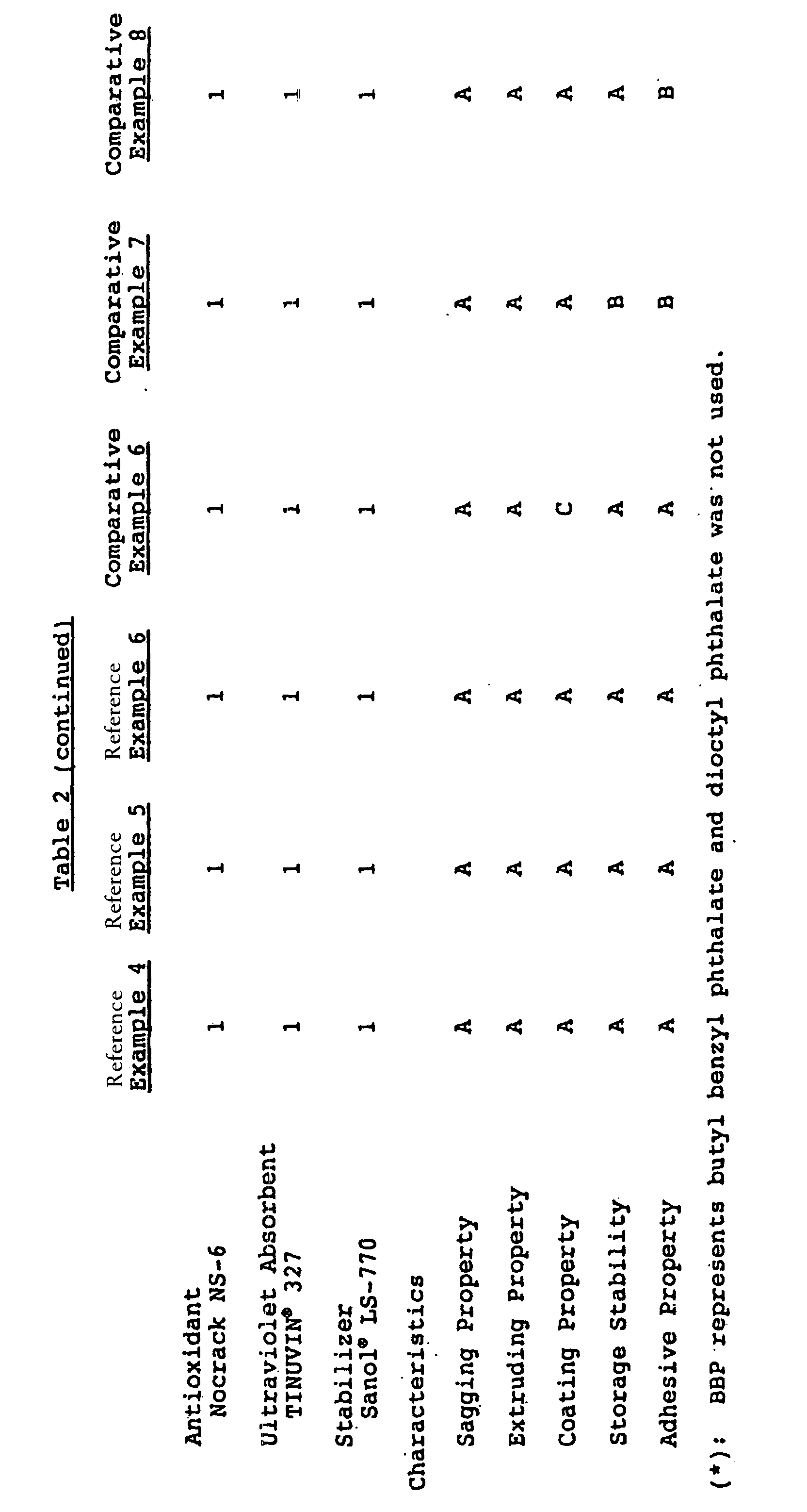

As shown in Table 2, in Comparative Examples 6 and 7, without the phthalic acid ester plasticizer, the coating property of the cured product is reduced and when CH₂=CHSi(OCH₃)₃, component (D), is not included, the storage stability of the curable composition is reduced.

Furthermore, from Comparative Example 8, without H₂N(CH₂)₂NH(CH₂)₃Si(OCH₃)₃, the adhesion properties of the curable composition are reduced.

## Claims

1. A curable composition comprising (A) 100 parts by weight of a oxypropylene polymer having a group represented by the following formula (2): 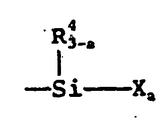 wherein R⁴ represents an alkyl group having from 1 to 20 carbon atoms, an aryl group having from 6 to 20 carbon atoms, an aralkyl group having from 7 to 20 carbon atoms, or a triorganosiloxy group represented by the formula (R')₃SiO- (wherein R' represents a monovalent hydrocarbon group having from 1 to 20 carbon atoms and three R's may be the same or different), when two or more R⁴ exist, they may be the same or different;
X represents a hydroxy group or a hydrolyzable group, when two or more Xs exist, they may be the same or different; a represents 0 or an integer of from 1 to 3; with the proviso that formula (2) is not (CH₃O)₂(CH₃)Si-, the oxypropylene polymer having a Mw/Mn value of not more than 1.5, and
an average molecular weight of at least 10,000, (B) from 100 to 200 parts by weight of calcium carbonate containing at least 30% by weight calcium carbonate of an average particle size of not larger than 0.5 µm, and surface-treated with a fatty acid, (C) from 30 to 100 parts by weight of a plasticizer containing at least 5% by weight phthalic acid ester plasticizer, (D) from 0.5 to 10 parts by weight of a compound represented by the formula R¹Si(OCH₃)₃ and/or Si(OCH₂CH₃)₄ (wherein R¹ represents a monovalent organic groups containing no amino group), (E) from 0.5 to 10 parts by weight of a compound represented by following formula (1),
R²Si(CH₃)ₙ(OR³)₃₋ₙ (1)
wherein R² represents a monovalent organic group having at least one amino group; R³ represents CH₃ or CH₂CH₃; and n represents 0 or 1 and (F) from 0.5 to 5 parts by weight of an organotin curing catalyst, the total amount of said components (D) and (E) being at least 2 parts by weight, and said component (A) occupying from 15 to 35% by weight.

2. The curable composition of claim 1, wherein the phthalic acid ester plasticizer is di(2-ethylhexyl phthalate).

## Patentansprüche

1. Härtbare Zusammensetzung, umfassend (A) 100 Gewichtsteile eines Oxypropylenpolymers mit einer Gruppe der nachstehenden Formel (2): 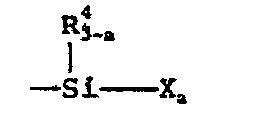 wobei R⁴ einen Alkylrest mit 1 bis 20 Kohlenstoffatomen, einen Arylrest mit 6 bis 20 Kohlenstoffatomen, einen Aralkylrest mit 7 bis 20 Kohlenstoffatomen oder eine Triorganosiloxygruppe der Formel (R')₃SiO- (wobei R' einen einwertigen Kohlenwasserstoffrest mit 1 bis 20 Kohlenstoffatomen darstellt und die drei Reste R' gleich oder verschieden sein können) darstellt, wenn zwei oder mehrere Reste R⁴ vorhanden sind, diese gleich oder verschieden sein können; X eine Hydroxygruppe oder eine hydrolysierbare Gruppe darstellt, wenn zwei oder mehrere Gruppen X vorhanden sind, diese gleich oder verschieden sein können; a 0 oder eine ganze Zahl von 1 bis 3 bedeutet; mit der Maßgabe, dass Formel (2) nicht (CH₃O)₂(CH₃)Si- ist, wobei das Oxypropylenpolymer einen nicht größeren Wert von Mw/Mn als 1,5 und ein mittleres Molekulargewicht von mindestens 10000 aufweist, (B) 100 bis 200 Gewichtsteile Calciumcarbonat, das mindestens 30 Gew.-% Calciumcarbonat mit einem mittleren Teilchendurchmesser von nicht größer als 0,5 µm enthält und mit einer Fettsäure oberflächenbehandelt ist, (C) 30 bis 100 Gewichtsteile eines Weichmachers, der mindestens 5 Gew.-% eines Phthalsäureesterweichmachers enthält, (D) 0,5 bis 10 Gewichtsteile einer Verbindung der Formel R¹Si(OCH₃)₃ und/oder Si(OCH₂CH₃)₄ (wobei R¹ einen einwertigen organischen Rest ohne Aminogruppe bedeutet), (E) 0,5 bis 10 Gewichtsteile einer Verbindung der nachstehenden Formel (1)
R²Si(CH₃)ₙ(OR³)₃₋ₙ (1)
wobei R² einen einwertigen organischen Rest mit mindestens einer Aminogruppe darstellt; R³ eine CH₃- oder CH₂CH₃-Gruppe darstellt; und n 0 oder 1 bedeutet, und (F) 0,5 bis 5 Gewichtsteile eines zinnorganischen Härtungskatalysators, wobei die Gesamtmenge der Komponenten (D) und (E) mindestens 2 Gewichtsteile beträgt und die Komponente (A) 15 bis 35 Gew.-% einnimmt.

2. Härtbare Zusammensetzung gemäß Anspruch 1, wobei der Phthalsäureesterweichmacher Phthalsäuredi(2-ethylhexyl)ester ist.

## Revendications

1. Composition durcissable comprenant (A) 100 parties en masse d'un polymère d'oxypropylène ayant un groupe représenté par la formule (2) suivante : 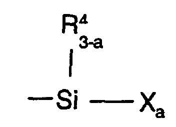 où R⁴ représente un groupe alkyle ayant de 1 à 20 atomes de carbone, un groupe aryle ayant de 6 à 20 atomes de carbone, un groupe aralkyle ayant de 7 à 20 atomes de carbone, ou un groupe triorganosiloxy représenté par la formule (R')₃SiO- (où R' représente un groupe hydrocarboné monovalent ayant de 1 à 20 atomes de carbone et trois R' peuvent être identiques ou différents), quand deux ou plusieurs R⁴ existent, ils peuvent être identiques ou différents ;
X représente un groupe hydroxyle ou un groupe hydrolysable, quand deux ou plusieurs X existent, ils peuvent être identiques ou différents ; a représente 0 ou un entier de 1 à 3 ; avec la condition que la formule (2) n'est pas (CH₃O)₂(CH₃)Si-,
une valeur Mp/Mn d'au plus 1,5, et
une masse moléculaire moyenne d'au moins 10 000, (B) de 100 à 200 parties en masse de carbonate de calcium contenant au moins 30 % en masse de carbonate de calcium d'une taille de particule moyenne d'au plus 0,5 µm, et traité en surface avec un acide gras, (C) de 30 à 100 parties en masse d'un plastifiant contenant au moins 5 % en masse de plastifiant ester d'acide phtalique, (D) de 0,5 à 10 parties en masse d'un composé représenté par la formule R¹Si(OCH₃)₃ et/ou Si(OCH₂CH₃)₄ (où R¹ représente un groupe organique monovalent ne contenant pas de groupe amino), (E) de 0,5 à 10 parties en masse d'un composé représenté par la formule (1) suivante,
R²Si(CH₃)ₙ(OR³)₃₋ₙ (1)
où R² représente un groupe organique monovalent ayant au moins un groupe amino ; R³ représente CH₃ ou CH₂CH₃ ; et n représente 0 ou 1
et (F) de 0,5 à 5 parties en masse d'un catalyseur de durcissement organo-étain, la quantité totale desdits composants (D) et (E) étant d'au moins 2 parties en masse, et ledit composant (A) occupant de 15 à 35 % en masse.

2. Composition durcissable selon la revendication 1 où le plastifiant ester d'acide phtalique est le di(phtalate de 2-éthylhexyle).
